# EUROPÄISCHE PATENTSCHRIFT

(11) **EP 4 314 618 B1**
(45) Veröffentlichungstag und Bekanntmachung des Hinweises auf die Patenterteilung: **17.06.2026**
(21) Anmeldenummer: 22717631.0
(22) Anmeldetag: 25.03.2022
(51) Int. Cl.: F16L 25/00, F16L 57/06

(54) **VERSCHLEISSRING**
WEAR RING
BAGUE D'USURE

(30) Priorität: 26.03.2021 EP 21165226
(43) Veröffentlichungstag der Anmeldung: 07.02.2024
(73) Patentinhaber: ABB SCHWEIZ AG, 5400 Baden (CH); BizLink Industry Germany GmbH, 91154 Roth (DE)
(72) Erfinder: JOESTEN, Bernd, 30880 Laatzen (DE); MARKOVIC, Slavko, 8302 Kloten (CH)
(74) Vertreter: Maiwald GmbH
(86) Internationale Anmeldenummer: PCT/EP2022/057972
(87) Internationale Veröffentlichungsnummer: WO 2022/200597

(56) Entgegenhaltungen:
- EP-A1- 0 073 892
- DE-A1- 102013 011 819
- DE-U1- 29 920 972
- DE-U1- 8 805 482

## Beschreibung

Die vorliegende Erfindung betrifft einen Verschleißring zur Anbringung an einem Rohr, Schlauch, Kabel, oder dergleichen, insbesondere an einem Wellrohr. Der Verschleißring umfasst zwei Ringhälften, welche miteinander zu einem Ring verbindbar sind, wobei an den Ringhälften eine Befestigungsstruktur angeordnet ist, mit welcher der Verschleißring an dem Rohr, Schlauch, Kabel oder dergleichen fixierbar ist. Die Ringhälften weisen Verbindungsmittel auf, mit welchen diese in einer axialen Richtung formschlüssig miteinander verbindbar sind

### STAND DER TECHNIK

Derartige Verschleißringe sind an kritischen Stellen eines Schutzschlauches für Kabel an Maschinen, insbesondere beweglichen Maschinenteilen, angebracht, um eine Beschädigung des Schutzschlauches selbst durch Scheuern an solchen kritischen Stellen, zu verhindern. Da die Verschleißringe an kritischen Stellen angeordnet sind, können sie selbst abgescheuert werden.

Die EP 1 398 555 A1 offenbart einen Verschleißring, welcher zwei Ringhälften aufweist, die über tangential im Bereich der Stoßflächen befestigten Schrauben miteinander verbunden werden. In axialer Richtung des Verschleißringes ist innenseitig in einem ersten Bereich eine als Rippen ausgebildete Struktur angeordnet. Über diese Rippen wird der Verschleißring, nach einem Verbinden der Ringhälften, an dem Wellrohr gehalten. In einem zweiten Bereich, welcher sich axial an den ersten Bereich anschließt, ist ein drehbar gelagerter Innenring in dem Verschleißring angeordnet, so dass zwei, im Bereich des Verschleißrings, miteinander verbundene Wellrohre, gegeneinander drehbar sind.

Aus der DE 298 14 418 U1 ist ein Verschleißring für ein Wellrohr bekannt, mit welchem eine Kabelführung eines Roboters gegen verschleißt geschützt werden soll. Der Verschleißring weist zwei Ringhälften auf, welche über zwei tangential eingebrachte Schrauben miteinander verbunden werden. Innenseitig weist der Verschleißring eine Rippenstruktur auf, mit welcher der Verschleißring auf dem Wellrohr in axialer Richtung fixiert ist. Jede Ringhälften ist aus zwei, übereinander angeformten, unterschiedlichen, Materialien ausgebildet, um einen Verschleißstatus feststellen zu können, so dass es nach einem übermäßigen Verschleiß nicht zu einer Beschädigung des Roboters durch hervorschauende Schrauben des Verschleißringes kommt.

Die DE 20 2007 012 036 U1 offenbart einen Verschleißring für Wellrohre. Der Verschleißring ist gebildet aus zwei Ringhälften, welche innenseitig eine Rippen- und Nuten-Struktur aufweisen, um den Verschleißring in einer montierten Form auf dem Wellrohr zu fixieren. Die Ringhälften weisen außenseitig eine mittig angeordnete Nut auf, über welche die Ringhälften mittels eines in der Nut angeordneten Kabelbinders miteinander verbunden werden.

Das Dokument DE 10 2013 011 819 A1 beschreibt eine Kunststoffschale, die aus zwei identischen, lösbar miteinander verbundenen Halbschalen besteht und zur Aufnahme eines Spiralschlauchs dient. Jede Halbschale weist an ihrer Innenfläche mindestens eine Reihe von Eingriffsnoppen auf, die punktuell in das schraubenförmig umlaufende Wellental des Spiralschlauchs eingreifen und so eine Fixierung in Längsrichtung ermöglichen. Die Halbschalen sind mit Rasthaken und passenden Aufnahmen ausgestattet, sodass sie einfach miteinander verbunden werden können. Durch die identische Ausbildung der Halbschalen und die spezielle Anordnung der Noppen wird eine kostengünstige Herstellung und eine sichere Befestigung des Spiralschlauchs erreicht.

Das Dokument DE 8805482 U1 beschreibt ein Anschlussverbindungsstück für ein geripptes Rohr, das insbesondere als flexibles Kabelschutzrohr verwendet wird. Das Dokument beschreibt ein zylindrisches Gehäuse mit einem eingesenkten Bereich und einem darin verlaufenden, geteilten Schlitz sowie ein U-förmiges Verriegelungselement, das mit Rastgliedern und Rippen ausgestattet ist, um das Rohr sicher zu fixieren. Durch die spezielle Anordnung der Schlitze, Rastglieder und des Verriegelungselements wird eine hohe Festigkeit des Gehäuses erreicht und ein einfaches, sicheres Verbinden und Lösen des Rohrs ermöglicht. Dadurch wird die Stabilität des Anschlussverbindungsstücks verbessert und die Gefahr des unbeabsichtigten Lösens durch äußere Kräfte verringert.

Aufgrund der Tatsache, dass aktuell die Halbschalen vorzugsweise mit Metall- oder metallähnlichen Schrauben realisiert sind, kann es vorkommen, dass der Abrieb an exakt jener Stelle Auftritt, wo sich die Schraube befindet. Dies hat somit zur Folge, dass der Gegenkörper wie beispielsweise ein Industrieroboter oder eine metallische Armatur beschädigt werden und einen signifikanten Schaden an umliegenden Einrichtungen entsteht.

Des Weiteren werden die genauen Positionen des Verschleißrings erst im Nachhinein definiert, was eine Umpositionierung erfordert was dazu führt, dass der Verschleißring aufgrund des Designs und der Befestigung mit Schrauben, Kabelbinder, Klettverschlüssen oder ähnlichem komplett gelöst und neu verbunden werden muss. Bei einer großen Anzahl an Verschleißringen ist dies zumeist zeitaufwändig.

Die der Erfindung zugrundeliegende Aufgabe ist es, einen Verschleißring anzugeben, mit welchem eine Beschädigung der umliegenden Struktur vermieden werden kann und mit welchem in kurzer Zeit die Position an dem Wellrohr, Rohr oder Kabel wechselbar ist.

Zur Lösung der Aufgabe wird ein Verschleißring mit den Merkmalen des Anspruchs 1 angegeben. Vorteilhafte Weiterbildungen der Erfindung sind den jeweiligen Unteransprüchen zu entnehmen.

### OFFENBARUNG DER ERFINDUNG

Die Erfindung zeichnet sich dadurch aus durch einen Verschleißring, gemäß den Merkmalen des charakterisierenden Teils von Anspruch 1.

Obwohl die Erfindung in Bezug auf ein Wellrohr spezifiziert worden ist, kann anstelle eines Wellrohrs auch ein Rohr, Schlauch, Kabel, oder dergleichen verwendet werden. Die axiale Richtung ist in dieser Erfindung bezogen auf den Ring und entspricht gleichzeitig der Richtung des in dem Verschleißring aufgenommenen Wellrohrs. Die Verbindungsmittel sind derart ausgebildet, dass ein Zusammenbau oder ein Lösen der Ringhälften nur in axialer Richtung möglich ist. Der Verschleißring wird dabei direkt auf dem Wellrohr zusammengesetzt. Die formschlüssige Verbindung der Ringhälften hat dabei den Vorteil, dass keine Schrauben etc. verwendet werden müssen, durch welche die umliegenden Strukturen beschädigt werden können. Der Zusammenbau wird dadurch wesentlich vereinfacht, da kein zusätzliches Werkzeug zur Befestigung notwendig ist.

Durch die radiale Bewegung des Ringeinsatzes wird der Innendurchmesser des Verschleißrings so weit verkleinert, bis dieser auf dem Wellrohr fixiert ist. Da die eigentliche Fixierung des Rings auf dem Wellrohr somit durch den Ringeinsatz vorgenommen wird, ist der Ring, vor der Fixierung durch die Ringeinsätze, in axialer Richtung auf dem Wellrohr bewegbar. Dadurch kann der Verschleißring nach einem Lösen des Ringeinsatzes neu positioniert werden. Für ein Lösen des Verschleißrings am Wellrohr muss somit nur noch der Ringeinsatz gelöst und in eine radial äußere Position gebracht werden. Der Ring muss somit nicht mehr auseinander gebaut werden. Eine neue Positionierung des Verschleißrings ist dadurch innerhalb kurzer Zeit möglich.

Vorzugsweise weist der Verschleißring zwei Ringeinsätze auf, welche sich gegenüberliegen. Dies hat der Vorteil, dass die Haltbarkeit des Verschleißrings auf dem Wellrohr erhöht wird. Zudem wird das Wellrohr gleichmäßig durch die Ringeinsätze eingeklemmt.

In einer bevorzugten Ausführung der Erfindung ist der Ringeinsatz austauschbar an der Ringhälfte angeordnet. Der Ringeinsatz kann dadurch durch einen Ringeinsatz mit einer unterschiedlichen Kontur auf der innenseitig getauscht werden. Dadurch kann die Kontur auf das verwendete Wellrohr, Kabel etc. angepasst werden. Der Verschleißring ist dadurch für verschiedene Oberflächen einsetzbar, so dass der Verschleißring vielseitig einsetzbar ist. Da lediglich der Ringeinsatz getauscht werden muss wird die Anzahl an verschiedenen Teilen, die für die unterschiedlichen Wellrohre, Kabel etc. vorzuhalten sind, wesentlich reduziert.

In einer weiteren bevorzugten Ausführung der Erfindung weisen die Ringhälften Mittel auf, mit welchen der Ringeinsatz in einer Auslieferungsposition gehalten ist. Die Auslieferungsposition ist dabei eine Position, bei welcher der Ringeinsatz in einer radial inneren Position ist. Diese Position entspricht im Wesentlichen der fixierten Position. In dieser Position ist der Ring jedoch nicht am Wellrohr fixiert. Die Mittel können dabei derart ausgebildet sein, dass eine Klemmkraft auf den Ringeinsatz ausgeübt wird. Dadurch wird ein Herausfallen der Ringeinsätze aus den Ringhälften während eines Transportes vermieden. Die Ringhälften können somit bereits mit vormontierten Ringeinsätzen ausgeliefert werden, so dass die Anzahl an Einzelteilen reduziert wird. Dadurch wird die Handhabung des Verschleißrings vereinfacht.

Vorzugsweise weisen die Verbindungsmittel zum axialen Verbinden der Ringhälften eine Schnappverbindung auf, über welche die Ringhälften in einer verbundenen Position, in der axialen Richtung zueinander fixiert sind. In einer montierten Position der Ringhälften verrastet sich die Schnappverbindung. Die Ringhälften können sich somit nicht mehr gegeneinander verschieben. Dadurch wird automatisch eine korrekte Montageposition der Ringhälften zueinander erzielt, welche durch die Schnappbewegung einem Anwender haptisch angezeigt wird. Zusätzlich kann der aus den Ringhälften gebildete Ring während einer axialen Bewegung auf dem Wellrohr sich nicht verschieben oder auseinanderfallen. Die Benutzung des Verschleißrings wird dadurch vereinfacht.

In einer vorteilhaften Weiterbildung ist der Ringeinsatz in einer Vormontageposition in einer innenseitigen Aussparung der Ringhälfte angeordnet. Durch die Aufnahme in der Aussparung ist es möglich einen minimalen Innendurchmesser für den Ring zu wählen. Dadurch ist der Verschleißring nicht größer als ein üblich verwendeter Verschleißring. Dies hat den Vorteil, dass der Verschleißring klein ausgeführt werden kann.

Vorzugsweise ist der Ringeinsatz in der Vormonateposition komplett innerhalb der Aussparung angeordnet, so dass der Ringeinsatz nicht über eine Innenseite des Ringes hinausragt. Dies hat zusätzlich den Vorteil, dass mögliche dem Ringeinsatz ausgebildete Rippen eine axiale Bewegung des Verschleißringes auf dem Wellrohr nicht behindern. Da die Innenseite des Ringes, vorzugsweise glatt ausgebildet ist, kann der Verschleißring ohne Widerstand über eine Außenseite des Wellrohrs in axialer Richtung bewegt werden. Die Positionierung des Verschleißringes wird dadurch wesentlich vereinfacht.

Vorteilhafterweise weist der Ringeinsatz Fortsätze auf, welche in einer Vormontageposition eine radiale Außenseite der Ringhälfte überragen. Die Fortsätze erstrecken sich vorzugsweise in der radialen Bewegungsrichtung des Ringeinsatzes.

Durch die Fortsätze ist der Ringeinsatz von einer Außenseite des Ringes, in eine fixierte Position bringbar. Die Fixierung des Verschleißringes wird dadurch für einen Anwender vereinfacht.

Bei einer weiteren vorteilhaften Ausführung weisen die Fortsätze Rastnasen auf, welche in einer fixierten Stellung des Ringes mit der Ringhälfte im Eingriff sind. Rastnasen sind einfache Maßnahmen, um ohne weitere Befestigungsmittel die fixierte Position der Ringeinsätze zu arretieren. Rastnasen haben zudem den Vorteil, dass diese durch eine Bewegung der Rastnase entgegen einer Einrastrichtung wieder gelöst werden können. Dadurch ist es möglich eine lösbare Verbindung herzustellen, so dass der Verschleißring bei Bedarf wieder verschoben werden kann.

Gemäß einer zweckmäßigen Ausführung sind in der fixierten Stellung des Ringes, auf die Fortsätze Verschlusskappen aufbringbar. Die Verschlusskappen decken dabei die Fortsätze in einer fixierten Stellung am Wellrohr ab. Dadurch ist eine optische Kontrolle einer fixierten Position einfach möglich. Vorzugsweise sind die Verschlusskappen in einer anderen Farbe ausgeführt. Durch die andere Farbe sind die Verschlusskappen noch besser für einen Anwender sichtbar, so dass auf einfache Weise eine fixierte Position des Verschleißrings optisch ermittelt werden kann.

Gemäß einer weiteren zweckmäßigen Ausführung sind die Ringhälften identisch ausgebildet. Eine identische Ausbildung der Ringhälften hat den Vorteil, dass für beide Ringhälften derselbe Herstellungsprozess und die gleiche Spritzgussform verwendbar ist. Dadurch wird die Herstellung vereinfacht und kann wirtschaftlich durchgeführt werden. Ebenso ist es für den Anwender nicht möglich Teile zu vertauschen. Der Gebrauch des Verschleißrings ist dadurch durch den Benutzer einfacher und sicherer. Besonders bevorzugt sind auch die Ringeinsätze identisch ausgebildet.

Vorzugsweise ist der Ringeinsatz an dem Rohr, Schlauch, Kabel, oder dergleichen form- oder kraftschlüssig fixierbar. Der Ringeinsatz kann austauschbar in den Ringhälften angeordnet sein. Dadurch ist es möglich entweder einen Ringeinsatz zu verwenden, dessen innenseitige Oberfläche für eine formschlüssige Verbindung mit Rippen ausgebildet ist. Folglich kann damit eine hohe Haltbarkeit auf dem beispielsweise Wellrohr erzielt werden. Da beispielweise Kabel keine strukturierte Oberfläche aufweisen kann mit einer kraftschlüssigen Verbindung auch auf einer solchen Oberfläche eine gute Haltbarkeit erzielt werden. Bei Bauteilen, wie beispielsweise überextrudierten Wellrohren, würde eine formschlüssige Verbindung zu einer Zerstörung der Oberfläche führen. Daher wird dafür eine kraftschlüssige Verbindung verwendet. Der Verschleißring ist dadurch für verschieden Rohre, Schläuche oder Kabel einsetzbar, so dass eine hohe Einsetzbarkeit für den Verschleißring möglich ist.

In einer vorteilhaften Weiterbildung sind der Ringeinsatz und die Ringhälften aus einem Kunststoffmaterial hergestellt. Der Ringeinsatz und die Ringhälften lassen sich dadurch einfach und kostengünstig herstellen. Beispielsweise können diese Bauteile im Wege des Spritzgießens hergestellt sein. Kunststoffmaterial hat zudem den Vorteil, dass es leicht ist, so dass der Verschleißring das beispielsweise Wellrohr nicht unnötig beschwert. Zudem wird die Struktur durch das Kunststoffmaterial nicht beschädigt. Vorzugsweise besehen Ringeinsatz und die Ringhälften aus dem gleichen Kunststoffmaterial, so dass der Verschleißring wirtschaftlich herstellbar ist.

Ausführungsbeispiele der Erfindung sind in der Zeichnung dargestellt und in der nachfolgenden Beschreibung näher erläutert. Es zeigt:
- Figur 1: Schnittansicht eines Ausführungsbeispiels eines Verschleißringes in einer fixierten Stellung,
- Figur 2: Schnittansicht des Verschleißrings aus Figur 1 in einer Vormontageposition,
- Figur 3: Perspektivische Ansicht einer Ringhälfte des Verschleißringes ohne Ringeinsatz,
- Figur 4: Perspektivische Ansicht einer Ringhälfte des Verschleißringes ohne Ringeinsatz, und
- Figur 5: Schnittansicht eines weiteren Ausführungsbeispiels eines Verschleißringes in einer fixierten Stellung mit Verschlusskappen.

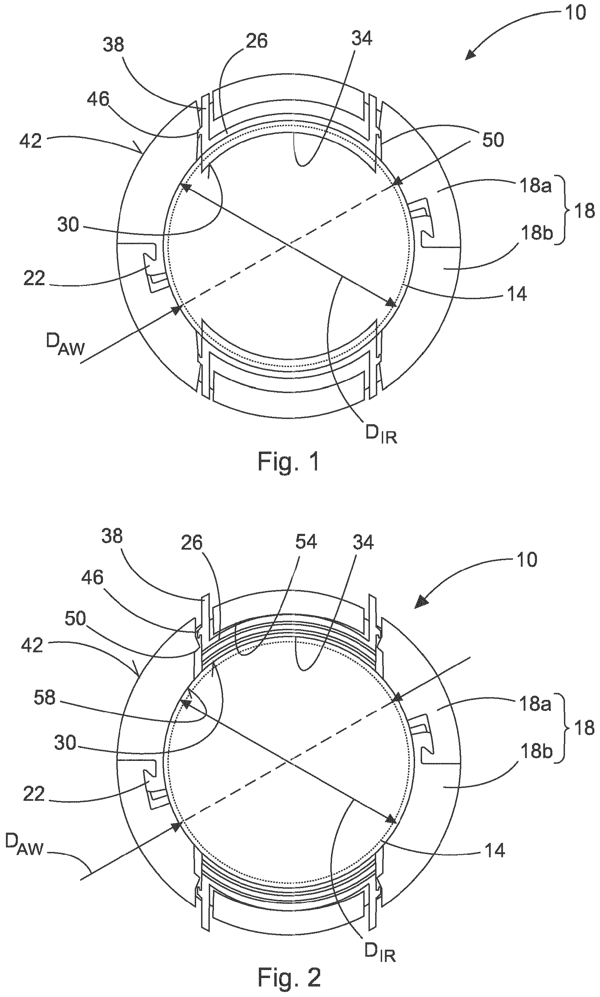

In Figur 1 ist eine Schnittansicht eines Ausführungsbeispiels eines Verschleißringes 10 in einer fixierten Stellung gezeigt. In dieser Stellung ist der Verschleißring 10 an einem hier gestrichelt gezeigten Wellrohr 14 fixiert, welches der Verschleißring 10 umgibt. Der Verschleißring 10 umfasst zwei Ringhälften 18a, 18b, welche über Verbindungsmittel 22 formschlüssig in einer radialen Richtung miteinander verbunden sind. Beide Ringhälften 18a, 18b bilden zusammen einen Ring 18, in welchen zwei als Ringeinsätze 26 ausgebildete Befestigungsstrukturen angeordnet sind. Die Ringeinsätze 26 bilden in diesem Ausführungsbeispiel an einer innenseitigen Oberfläche 30 eine Rippenstruktur 34 aus, welche formschlüssig mit der Wellenstruktur des Wellrohrs 14 im Eingriff ist. In diesem Ausführungsbeispiel ist sowohl der Ring 18 als auch die Ringeinsätze 26 aus einem Kunststoffmaterial hergestellt.

Ein Innendurchmesser D_{IR} des Ringes 18 ist dabei größer als ein Außendurchmesser D_{AW} des Wellrohrs 14. Dadurch wird der Verschleißring 10 am Wellrohr 14 durch die Ringeinsätze 26 gehalten. Jeder Ringeinsatz 26 weist zwei Fortsätze 38 auf, welche in einer fixierten Stellung bündig mit einer Außenseite 42 des Ringes 18 abschließen. Jeder Fortsatz 38 weist eine Rastnase 46 auf, welche in der fixierten Stellung mit einer Vertiefung 50 in der Ringhälfte 18a im Eingriff ist. Dadurch ist der Ringeinsatz 26 in der fixierten Stellung arretiert.

Figur 2 zeigt eine Schnittansicht des Verschleißrings 10 aus Figur 1 in einer Vormontageposition. In dieser Position sind die Ringeinsätze 26 in innenseitigen Aussparungen 54 der Ringhälften 18a, 18b angeordnet. Die Ringeinsätze 26 ragen dabei nicht über eine Innenseite 58 des Ringes 18 hinaus. Dadurch ist der Verschleißring 10 in axialer Richtung auf dem Wellrohr 14 bewegbar. In der Vormontageposition ragen die Fortsätze 38 über die Außenseite 42 des Ringes 18 hinaus. Dadurch können die Ringeinsätze 26, durch eine radial nach innen gerichtete Kraft auf die Fortsätze 26, in eine fixierte Stellung gebracht werden.

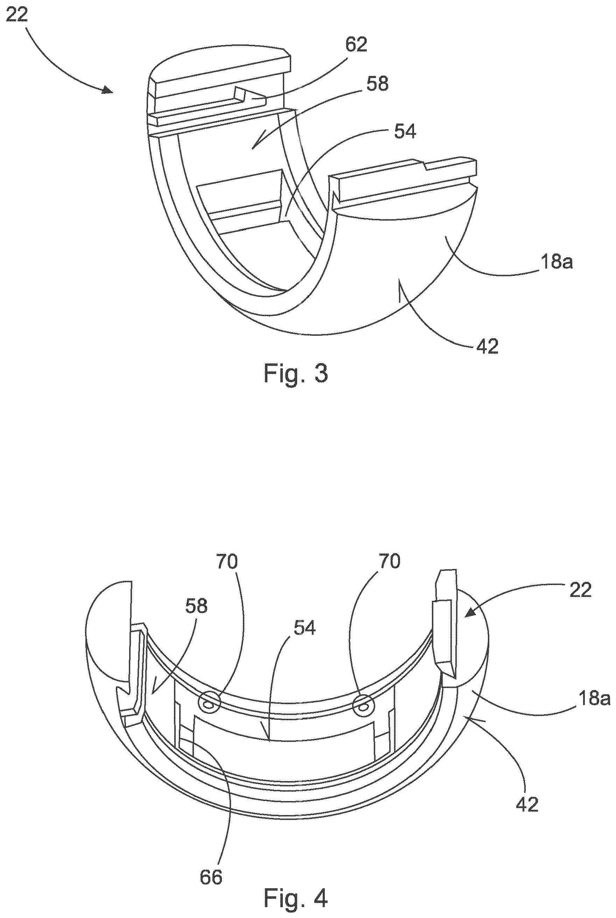

Eine perspektivische Ansicht einer Ringhälfte 18a des Verschleißringes 10 ist in Figur 3 gezeigt. Die Ringhälfte 18a ist hierbei ohne Ringeinsatz 26 dargestellt. Da die beiden Ringhälften 18a, 18b identisch ausgebildet sind, wird hier exemplarisch lediglich die Ringhälfte 18a beschrieben. Die Ringhälfte 18a weist in diesem Ausführungsbeispiel eine ballige Außenkontur auf. Im Bereich der Stoßstelle zu der anderen Ringhälfte 18b sind die Verbindungsmittel 22 angeordnet, welche hier als Eingriffselemente ausgebildet sind. Die Eingriffselemente 22 verlaufen dabei in einer axialen Richtung, so dass die beiden Ringhälften 18a, 18b durch eine axiale Bewegung miteinander verbindbar sind. An den Eingriffselementen 22 sind Schnappverbindungen 62 ausgebildet. In einer montierten Position der beiden Ringhälften 18a, 18b werden diese über die Schnappverbindung 62 zueinander fixiert, so dass ein axiales Lösen der beiden Ringhälften 18a, 18b erschwert ist.

Figur 4 zeigt eine weitere Darstellung der Ringhälfte 18a des Verschleißringes 10 ohne Ringeinsatz 26. In der hier gezeigten Darstellung ist die Aussparung 54 in der Ringhälfte 18a für den Ringeinsatz 26 deutlich zu erkennen. Ebenfalls sind zwei Durchbrüche 66 in der Ringhälfte 18a ausgebildet, in welchen die Fortsätze 38 des Ringeinsatzes 26 angeordnet sind. Die Aussparung 54 in der Ringhälfte 18a weist zusätzlich Mittel 70 auf, mit welchen der Ringeinsatz 26 in einer Auslieferungsposition gehalten ist. Damit wird verhindert, dass der Ringeinsatz 26 nach innen herausfällt. Diese Mittel 70 sind in diesem Ausführungsbeispiel als Noppen ausgebildet. Die Noppen 70 ragen in dem hier gezeigten Ausführungsbeispiel in eine axiale Richtung in die Aussparung 54 hinein. Auf einer zu der hier gezeigten axial gegenüberliegenden Seite sind ebenfalls, hier nicht dargestellte, Noppen 70 angeordnet. Über beide Noppenpaare wird der Ringeinsatz 26 in der Auslieferungsposition verklemmt.

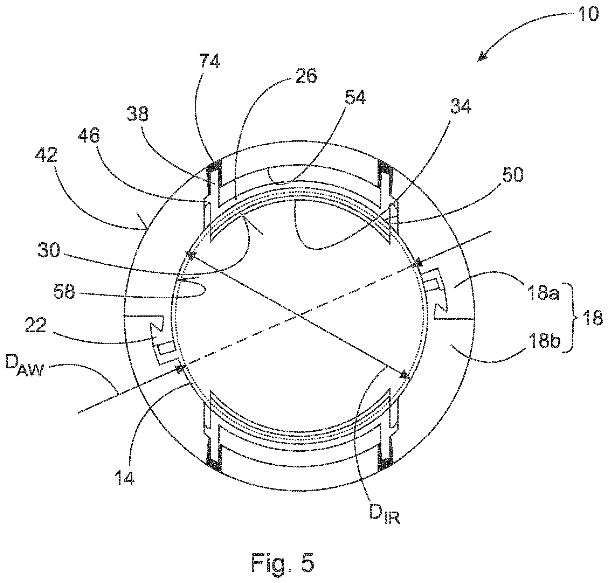

In Figur 5 ist eine Schnittansicht eines weiteren Ausführungsbeispiels eines Verschleißringes 10 in einer fixierten Stellung gezeigt. Im Gegensatz zu dem Ausführungsbeispiel aus Figur 1 enden die Fortsätze 38 in einer fixierten Stellung nicht bündig mit der Außenseite 42 des Ringes 18. In diesem Ausführungsbeispiel enden die Fortsätze 38 in der fixierten Stellung im Bereich des Ringes 18. Zusätzlich sind in diesem Ausführungsbeispiel Verschlusskappen 74 auf den Fortsätzen 38 angeordnet. Diese Verschlusskappen 74 bilden mit der Außenseite 42 eine durchgehende Fläche. In diesem Ausführungsbeispiel sind die Verschlusskappen 74 in einer anderen Farbe ausgeführt als der Ring 18. Dadurch ist es für den Benutzer einfach zu erkennen, ob sich der Ring 18 in einer fixierten Stellung befindet.

### Bezugszeichenliste

- 10: Verschleißring
- 14: Wellrohr
- 18: Ring
- 18a: Ringhälfte
- 18b: Ringhälfte
- 22: Verbindungsmittel /Eingriffselement
- 26: Ringeinsatz / Befestigungsstruktur
- 30: innenseitigen Oberfläche
- 34: Rippenstruktur
- 38: Fortsatz
- 42: Außenseite
- 46: Rastnase
- 50: Vertiefung
- 54: Aussparung
- 58: Innenseite
- 62: Schnappverbindung
- 66: Durchbruch
- 70: Mittel / Noppen
- 74: Verschlusskappe
- D_{IR}: Innendurchmesser Ring
- D_{AW}: Außendurchmesser Wellrohr

## Patentansprüche

1. Verschleißring (10) zur Anbringung an einem Rohr, Schlauch, Kabel, oder dergleichen, insbesondere an einem Wellrohr (14), umfassend zwei Ringhälften (18a, 18b), welche miteinander zu einem Ring (18) verbindbar sind, wobei an den Ringhälften (18a, 18b) eine Befestigungsstruktur (26) angeordnet ist, mit welcher der Verschleißring (10) an dem Rohr, Schlauch, Kabel, oder dergleichen fixierbar ist, wobei die Ringhälften (18a, 18b) Verbindungsmittel (22) aufweisen, mit welchen diese in einer axialen Richtung formschlüssig miteinander verbindbar sind,
**dadurch gekennzeichnet, dass**
die Verbindungsmittel (22) derart ausgebildet sind, dass ein Zusammenbau oder Lösen der Ringhälften (18a, 18b) nur in axialer Richtung des Verschleißrings (10) möglich ist und die Befestigungsstruktur (26) ausgebildet ist durch wenigstens einen am Verschleißring (10) radial beweglichen Ringeinsatz (26), welcher zum Fixieren des Verschleißrings (10) an dem Rohr, Schlauch, Kabel, oder dergleichen in einer radial inneren Position am Verschleißring (10) arretierbar ist, wobei durch die radiale Bewegung des Ringeinsatzes (26) der Innendurchmesser des Verschleißrings (10) so weit verkleinert wird, bis dieser auf dem Rohr, Schlauch, Kabel, oder dergleichen fixiert ist.

2. Verschleißring (10) nach Anspruch 1, **dadurch gekennzeichnet, dass** der Ringeinsatz (26) austauschbar an der Ringhälfte (18a, 18b) angeordnet ist.

3. Verschleißring (10) nach Anspruch 1 oder 2, **dadurch gekennzeichnet, dass** die Ringhälften (18a, 18b) Mittel (70) aufweisen, mit welchen der Ringeinsatz (26) in einer Auslieferungsposition gehalten ist.

4. Verschleißring (10) nach einem der vorherigen Ansprüche, **dadurch gekennzeichnet, dass** die Verbindungsmittel (22) zum axialen Verbinden der Ringhälften (18a, 18b) eine Schnappverbindung (62) aufweisen, über welche die Ringhälften (18a, 18b) in einer verbundenen Position, in der axialen Richtung zueinander fixiert sind.

5. Verschleißring (10) nach einem der vorherigen Ansprüche, **dadurch gekennzeichnet, dass** der Ringeinsatz (26) in einer Vormontageposition in einer innenseitigen Aussparung (54) der Ringhälfte (18a, 18b) angeordnet ist.

6. Verschleißring (10) nach einem der vorherigen Ansprüche, **dadurch gekennzeichnet, dass** der Ringeinsatz (26) Fortsätze (38) aufweist, welche in einer Vormontageposition eine radiale Außenseite (42) der Ringhälfte (18a, 18b) überragen.

7. Verschleißring (10) nach Anspruch 6, **dadurch gekennzeichnet, dass** die Fortsätze (38) Rastnasen (46) aufweisen, welche in einer fixierten Stellung des Ringes (18) mit der Ringhälfte (18a, 18b) im Eingriff sind.

8. Verschleißring (10) nach Anspruch 6 oder 7, **dadurch gekennzeichnet, dass** in der fixierten Stellung des Ringes (18), auf die Fortsätze (38) Verschlusskappen (74) aufbringbar sind.

9. Verschleißring (10) nach einem der vorherigen Ansprüche, **dadurch gekennzeichnet, dass** die Ringhälften (18a, 18b) identisch ausgebildet sind.

10. Verschleißring (10) nach einem der vorherigen Ansprüche, **dadurch gekennzeichnet, dass** der Ringeinsatz (26) an dem Rohr, Schlauch, Kabel, oder dergleichen form- oder kraftschlüssig fixierbar ist.

11. Verschleißring (10) nach einem der vorherigen Ansprüche, **dadurch gekennzeichnet, dass** der Ringeinsatz (26) und die Ringhälften (18a, 18b) aus einem Kunststoffmaterial hergestellt sind.

## Claims

1. Wear ring (10) for attachment to a pipe, hose, cable or the like, in particular to a corrugated pipe (14), comprising two ring halves (18a, 18b) which can be connected to each other to form a ring (18), wherein a fastening structure (26) is arranged on the ring halves (18a, 18b), with which the wear ring (10) can be fixed to the pipe, hose, cable or the like, wherein the ring halves (18a, 18b) have connecting means (22) with which they can be connected to each other in a form-fitting manner in an axial direction,
**characterised in that**
the connecting means (22) are designed in such a way that assembly or disassembly of the ring halves (18a, 18b) is only possible in the axial direction of the wear ring (10), and the fastening structure (26) is formed by at least one ring insert (26) that is radially movable on the wear ring (10) and which can be locked to the pipe, hose, cable or the like in a radially inner position on the wear ring (10), whereby the radial movement of the ring insert (26) reduces the inner diameter of the wear ring (10) until it is fixed on the pipe, hose, cable or the like.

2. Wear ring (10) according to claim 1, **characterised in that** the ring insert (26) is arranged interchangeably on the ring half (18a, 18b).

3. Wear ring (10) according to claim 1 or 2, **characterised in that** the ring halves (18a, 18b) have means (70) by which the ring insert (26) is held in a delivery position.

4. Wear ring (10) according to one of the preceding claims, **characterised in that** the connecting means (22) for axially connecting the ring halves (18a, 18b) comprise a snap connection (62) by means of which the ring halves (18a, 18b) are fixed in relation to each other in the axial direction in a connected position.

5. Wear ring (10) according to one of the previous claims, **characterised in that** the ring insert (26) is arranged in a pre-assembly position in an internal recess (54) of the ring half (18a, 18b).

6. Wear ring (10) according to one of the preceding claims, **characterised in that** the ring insert (26) has projections (38) which, in a pre-assembly position, protrude beyond a radial outer side (42) of the ring half (18a, 18b).

7. Wear ring (10) according to claim 6, **characterised in that** the projections (38) have locking lugs (46) which engage with the ring half (18a, 18b) when the ring (18) is in a fixed position.

8. Wear ring (10) according to claim 6 or 7, **characterised in that,** in the fixed position of the ring (18), sealing caps (74) can be applied to the projections (38).

9. Wear ring (10) according to one of the previous claims, **characterised in that** the ring halves (18a, 18b) are identically designed.

10. Wear ring (10) according to one of the previous claims, **characterised in that** the ring insert (26) can be fixed to the pipe, hose, cable or the like by form fit or force fit.

11. Wear ring (10) according to one of the previous claims, **characterised in that** the ring insert (26) and the ring halves (18a, 18b) are made of a plastic material.

## Revendications

1. Bague d'usure (10) destinée à être placée sur un tube, un tuyau, un câble ou analogue, en particulier à un tube annelé (14), comprenant deux demi-bagues (18a, 18b), qui peuvent être reliées entre elles pour former une bague (18), une structure de fixation (26) étant disposée sur les demi-bagues (18a, 18b), au moyen de laquelle la bague d'usure (10) peut être fixée au tube, tuyau, câble ou analogue, les demi-bagues (18a, 18b) présentant des moyens de liaison (22) au moyen desquels celles-ci peuvent être reliées entre elles par complémentarité de forme dans une direction axiale, **caractérisée en ce que**
les moyens de liaison (22) sont réalisés de telle sorte qu'un assemblage ou un démontage des demi-bagues (18a, 18b) n'est possible que dans une direction axiale de la bague d'usure (10), et la structure de fixation (26) est réalisée par au moins un insert annulaire (26) mobile radialement sur la bague d'usure (10), lequel peut être bloqué, pour fixer la bague d'usure (10) sur le tube, tuyau, câble ou analogue, dans une position radialement intérieure sur la bague d'usure (10), la mobilité radiale de l'insert annulaire (26) permettant de réduire le diamètre intérieur de la bague d'usure (10) jusqu'à ce que celle-ci soit fixée sur le tube, tuyau, câble ou analogue.

2. Bague d'usure (10) selon la revendication 1, **caractérisée en ce que** l'insert annulaire (26) est disposé de manière interchangeable sur la demi-bague (18a, 18b).

3. Bague d'usure (10) selon la revendication 1 ou 2, **caractérisée en ce que** les demi-bagues (18a, 18b) présentent des moyens (70) au moyen desquels l'insert annulaire (26) est maintenu dans une position de livraison.

4. Bague d'usure (10) selon l'une quelconque des revendications précédentes, **caractérisée en ce que** les moyens de liaison (22) destinés à relier axialement les demi-bagues (18a, 18b) présentent une liaison à encliquetage (62), au moyen de laquelle les demi-bagues (18a, 18b) sont fixées l'une par rapport à l'autre dans une position assemblée, dans la direction axiale.

5. Bague d'usure (10) selon l'une quelconque des revendications précédentes, **caractérisée en ce que** l'insert annulaire (26) est disposé dans une position de prémontage dans un évidement (54) situé du côté intérieur de la demi-bague (18a, 18b).

6. Bague d'usure (10) selon l'une quelconque des revendications précédentes, **caractérisée en ce que** l'insert annulaire (26) présente des saillies (38) qui, dans une position de prémontage, dépassent un côté extérieur radial (42) de la demi-bague (18a, 18b).

7. Bague d'usure (10) selon la revendication 6, **caractérisée en ce que** les saillies (38) présentent des languettes d'encliquetage (46) qui, dans une position fixée de la bague (18), sont en prise avec la demi-bague (18a, 18b).

8. Bague d'usure (10) selon la revendication 6 ou 7, **caractérisée en ce que**, dans la position fixée de la bague (18), des capuchons de fermeture (74) peuvent être appliqués sur les saillies (38).

9. Bague d'usure (10) selon l'une quelconque des revendications précédentes, **caractérisée en ce que** les demi-bagues (18a, 18b) sont réalisées de manière identique.

10. Bague d'usure (10) selon l'une quelconque des revendications précédentes, **caractérisée en ce que** l'insert annulaire (26) peut être fixé sur le tube, tuyau, câble ou analogue par complémentarité de forme ou par adhérence.

11. Bague d'usure (10) selon l'une quelconque des revendications précédentes, **caractérisée en ce que** l'insert annulaire (26) et les demi-bagues (18a, 18b) sont fabriqués à partir d'un matériau plastique.
